Europäisches Patentamt

European Patent Office

Office européen des brevets

(11) Publication number: **0 147 229**
**B1**

(12) EUROPEAN PATENT SPECIFICATION

(45) Date of publication of patent specification: **13.04.88**

(51) Int. Cl.⁴: **C 03 B 40/02**

(21) Application number: **84309077.0**

(22) Date of filing: **21.12.84**

(54) Mold Lubricating apparatus for glassware making machines.

(30) Priority: **27.12.83 JP 245886/83**

(43) Date of publication of application:
**03.07.85 Bulletin 85/27**

(45) Publication of the grant of the patent:
**13.04.88 Bulletin 88/15**

(84) Designated Contracting States:
**DE FR GB**

(56) References cited:
**US-A-4 392 880**

(73) Proprietor: **Yamamura Glass Kabushiki Kaisha
2-21, Hamamatsubaracho
Nishinomiya Hyogo Prefecture (JP)**

(72) Inventor: **Sugie, Akio
13-56-304, Hoshoen, Takara-zuka
Hyogo Prefecture (JP)**
Inventor: **Yamawaki, Atsuyuki
4-2-60-307, Isoshi, Takarazuka
Hyogo Prefecture (JP)**
Inventor: **Doi, Hiromitsu
19-44-208, Ishizaicho Nishinomiya
Hyogo Prefecture (JP)**
Inventor: **Azuma, Katsuki
12-58-220, Notocho, Nishinomiya
Hyogo Prefecture (JP)**

(74) Representative: **White, Martin David et al
MARKS & CLERK 57/60 Lincoln's Inn Fields
London WC2A 3LS (GB)**

Courier Press, Leamington Spa, England.

## Description

### BACKGROUND OF THE INVENTION

The present invention relates to a mould lubricating apparatus for a glassware forming machine having a plunger mechanism and mould parts which form the glassware, which apparatus comprises nozzle holders and nozzles supported by the holders for spraying a mixed mist of lubricant and air onto moulding surfaces of the mould parts, feed means for feeding lubricant solution to the nozzles, feed means for feeding compressed air to the nozzles, and control means for controlling the feed means. Such a mould lubricating apparatus is known from EP—A1—0043261.

In this way, lubricant can be applied automatically onto the mould parts; subsequently, a gob of molten glass is inserted into the mould, and the glass article then formed can be separated from the mould in an efficient manner. The lubricant may be a liquid or a solution. There are two conventional techniques for the automatic application of the lubricant, namely an apparatus in which the lubricant is sprayed into the mould through a funnel (US—A—3 141 752) and an apparatus in which the lubricant is applied at a different position to that of the supply of the glass gob (DE—A—2 141 455 and US—A—3 623 856). In each of these apparatuses however the lubricant is sprayed downwards from above the mould so that the lubricant is also applied to the plunger, causing rapid cooling, localised cooling and soiling of the plunger; this can cause defects in the finished glass articles. Furthermore, as there are high temperatures in apparatus of this kind, the downwardly-sprayed lubricant is disturbed by rising air currents, making it more difficult to apply the lubricant uniformly to the moulding surfaces.

Apart from the foregoing, EP—AI—0 043 261 describes a mould lubricating apparatus in which a mixed lubricant/air mist is sprayed downwards onto the mould halves when the mould halves are in the mould open position, the mould halves being particularly of blank moulds for making parisons. One of the disadvantages is discussed immediately above.

US—A—4 392 880 describes a mould lubricating apparatus which is only for the lubricatof of blank moulds and blow moulds, the blank moulds being of the non-opening type and closed at the bottom. In this case, it is only possible to spray downwards into the moulds.

It is desirable to provide a mould lubricating apparatus, for example for glass bottle forming machines, which can apply a lubricant uniformly over the moulding surfaces of the moulds, whilst avoiding applying lubricant to the plunger and avoiding the problems given by rising air currents.

### SUMMARY OF THE INVENTION

The present invention provides a mould lubricating apparatus as set forth in Claim 1. Claims 2 to 6 set forth preferred features of the mould lubricating apparatus. The invention extends to a glassware forming or making machine including the mould lubricating apparatus according to any of claims 1 to 6, as set forth in claim 7.

The lubricant is sprayed towards the moulding surfaces from beneath a position at which the respective mould parts (e.g. neck rings, blank moulds or mould halves) are stationary, and the spray cannot be disturbed by a rising air current, making it possible to apply the lubricant uniformly to the moulding surfaces whilst keeping the amount of lubricant to a minimum and prolonging mould life.

As the nozzle holders are fixed relative to a plunger mechanism, the position and distance relation between the nozzles and the moulds can be made constant at all times, whatever vertical movements the plunger mechanism may have to make in order to accommodate replacement of the moulds by different moulds; thus the amount of lubricant applied to the moulding surfaces can be kept constant. Thus it is possible to provide a mould lubricating apparatus in which there is no variation in the lubricant spray, and in which the adjustment of the amount of lubricant applied is simplified.

### BRIEF DESCRIPTION OF THE DRAWINGS

Figure 1 is a fragmentary top plan view of one embodiment of a mould lubricating apparatus of the present invention;

Figure 2 is a fragmentary side sectional view showing an essential portion of the arrangement of Figure 1;

Figure 3 is a cross-section on an enlarged scale taken along the line III—III in Figure 1;

Figure 4 is a fragmentary vertical sectional view taken along the line IV—IV in Figure 1;

Figure 5 is a flow diagram for an air feed system and an oil feed system for lubricating neck rings;

Figure 6 is a flow diagram for an air feed system and an oil feed system for lubricating blank moulds;

Figures 7 and 8 are block diagrams respectively showing an air feed system control circuit and an oil feed system control circuit; and

Figure 9 is a diagram showing the relation between the actuation of solenoid valves in the oil feed system and the oil pressure in the oil feed passage.

### DESCRIPTION OF THE PREFERRED EMBODIMENTS

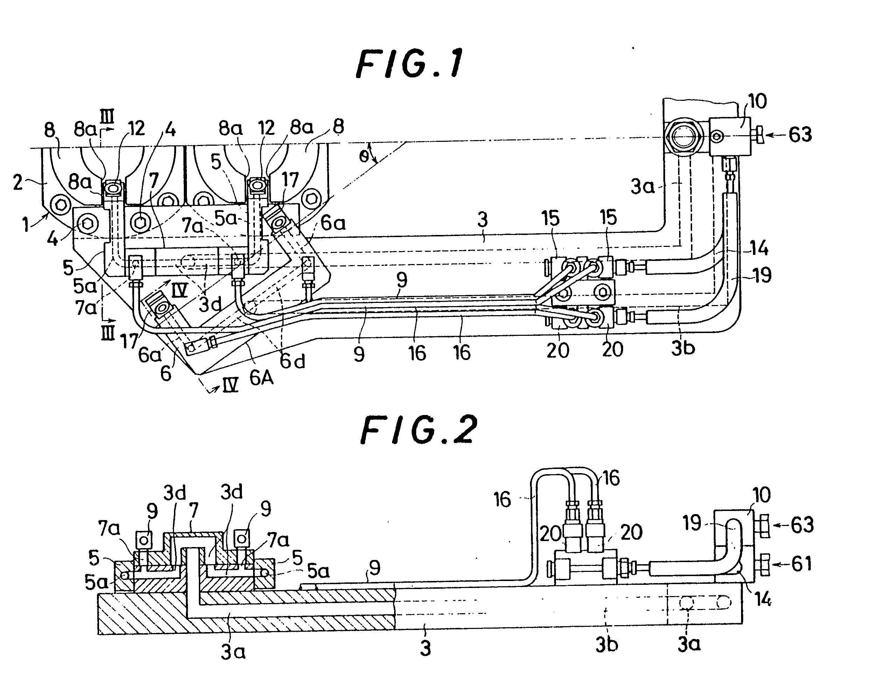

The drawings show a mould lubricating apparatus for applying lubricant to the moulding surfaces of blank moulds and neck rings for glass bottles. Figure 1 shows plunger mechanism 1 of a double-gob system, which is arranged to be capable of effecting two blowings simultaneously. A support bracket 3 is fixed by bolts 4 to a cap 2 located at the upper portion of this mechanism 1. Two neck mould nozzle holders 5 and blank mould nozzle holders 6 are mounted on the bracket 3.

Firstly, the neck ring lubricating apparatus will be explained.

The neck ring nozzle holders 5 are pivotally connected to opposite ends of an oil feed block 7 provided on the bracket 3, and can be raised and lowered. When lowered, they lie in grooves 8a provided at the left and right sides of neck ring receiving seats 8 for the respective plunger portions.

Neck ring oil feed pipes 9 are connected to respective lubricant introducing passages 7a formed in the oil feed block 7.

In the support bracket 3 described above, an air feed passage 3a is provided so as to be connected, through distribution passages 3d, with the respective introducing passages 7a in the oil feed block 7, so that the lubricant fed through the oil feed pipe 9 and air supplied through the air feed passage 3a join each other at the introducing passages 7a.

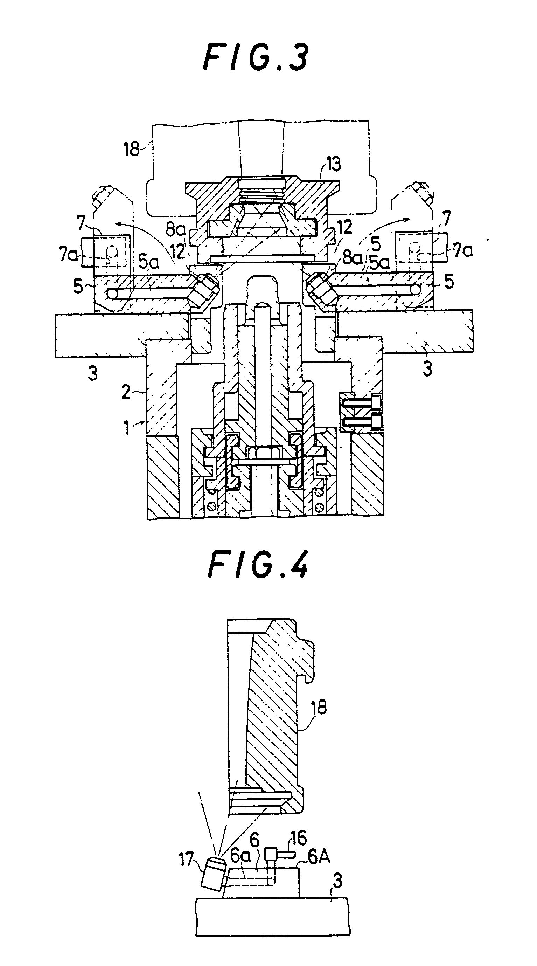

Through-holes 5a are formed in the respective nozzle holders 5, while neck ring nozzles 12 communicating with the through-holes 5a are mounted on forward end portions of the respective nozzle holders 5. The nozzles 12 are located in the concave groove 8a of the corresponding neck ring receiving seat 8 when the nozzle holders 5 are in the lowered attitude shown in solid lines in Figure 3. Simultaneously, the nozzles 12 face upwards so as to be directed towards the mould surfaces of the neck rings 13 which seat on the neck ring receiving seats 8. The through-holes 5a of the nozzle holders 5 are so arranged that they are aligned with the introducing passages 7a of the feed block 7 in the lowered attitude referred to above.

A junction block 10 is mounted on the support bracket 3, and the lubricant supplied via an oil feed passage 61 from an oil feed system to be described later, is distributed into the respective oil feed pipes 9 through this block 10, an oil feed pipe 14, and constant volume feed devices 15 by which the amount of oil feed to the respective nozzles 12 is controlled as desired.

The mechanisms described so far are also provided at the opposite side, with the plunger mechanism 1 therebetween; at each of the neck ring receiving seats 8, one pair of the nozzles 12 are positioned opposite each other as illustrated in Figure 3.

The blank mould (mould half) lubricating apparatus will now be described (see Figure 4).

The blank mould nozzle holders 6 have nozzles 17 at both ends thereof, and these nozzles 17 are located under a position where two mould halves 18 (shown by imaginary lines in Figure 3) are fully open (at an angle θ in Figure 1, which is 35° in the embodiment), directed upwards towards the mould surfaces of the two mould halves 18.

Blank mould oil feed pipes 16 are connected with respective through-holes 6a formed in both ends of the blank mould nozzle holders 6. An air feed passage 3b in the support bracket 3 is connected to these through-holes 6a. The air feed passage 3b is connected from an air feed block 6A (see Figure 4) on the bracket 3 to two distributing passages 6d in the nozzle holders 6, while the distributing passages 6d communicate with the through-holes 6a.

As in the neck rings, the lubricant supplied from the oil feed system to be described later, through an oil feed passage 63, is distributed into the respective oil pipes 16 through the junction block 10, oil feed pipe 19, and constant volume feed devices 20. The amount of oil fed to the respective nozzles 17 is adjusted as desired by the constant volume feed devices 20.

A mechanism similar to the above is provided on the opposite side, i.e. the upper half of Figure 1, for lubricating the mould halves which cooperate with the mould halves 18, with the plunger mechanism 1 therebetween.

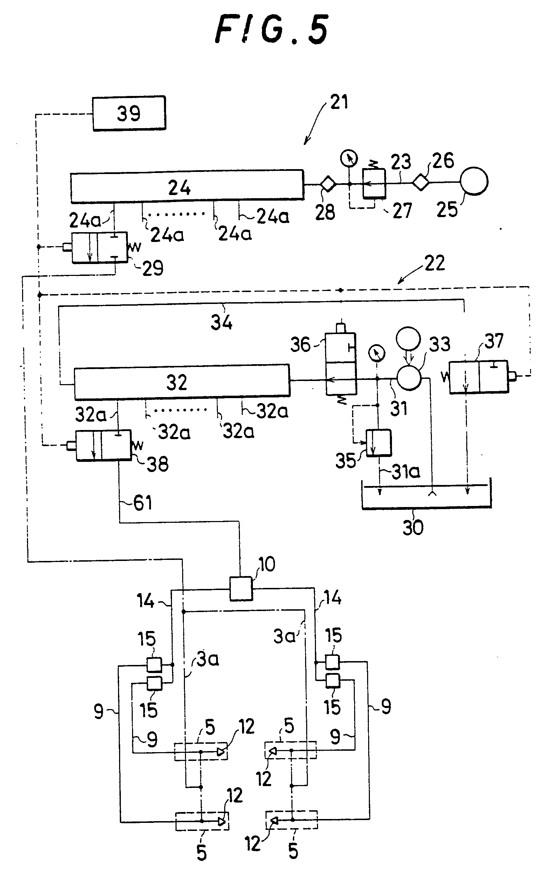

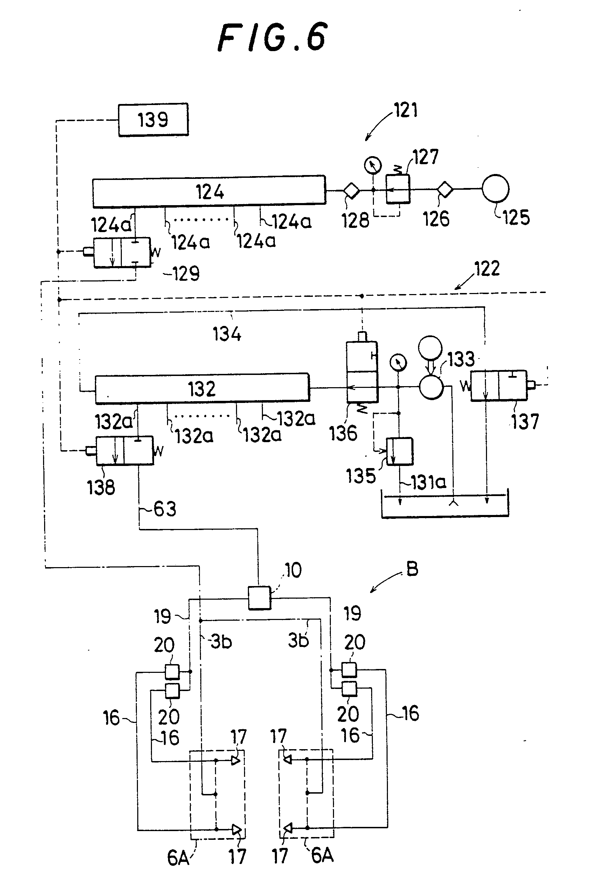

Figure 5 shows the neck ring air feed and oil feed mechanisms in the form of a flow diagram, while Figure 6 is a similar flow diagram for the blank moulds.

The neck ring air and oil feed mechanisms (Figure 5) will first be described, the mechanism comprising an air feed system 21 and an oil feed system 22.

In the air feed system 21, there is a compressor 25 for supplying compressed air to a manifold 24 through an air passage 23, a filter 26 provided in the air feed passage 23, a pressure reducing valve 27, a lubricator 28, etc. Branch passages 24a of the manifold 24 are provided for respective forming sections of the bottle making machine, and a solenoid valve 29 is provided in each branch passage 24a; each branch passage 24a communicates with the air feed passage 3a of the support bracket 3 for the respective forming section.

On the other hand, in the oil feed system 22 there is a pump 33 for supplying the lubricant in a tank 30 to a manifold 32 through an oil feed passage 31, an oil return passage 34 leading to the tank 30 from the end of the manifold 32, a valve 35 provided in the oil feed passage 31 for opening a branch passage 13a when the pressure in the passage 31 has exceeded a set value, to return the excessive lubricant in the passage 31 back into the tank 30, a solenoid valve 36 for opening or closing the oil feed passage 31, and a solenoid valve 37 for opening or closing the oil return passage 34. The oil feed passage 31, manifold 32 and oil return passage 34 form a circulating path for circulating the lubricant at all times so that there is no trouble such as undesirable settling of the lubricant, clogging, etc. Branched passages 32a from the manifold 32 are provided for the respective forming sections of the bottle making machine, and a solenoid valve 38 is provided in each branch passage 32a; an oil feed passage 61 connects the solenoid valve 38 to the junction block 10 of the corresponding forming section.

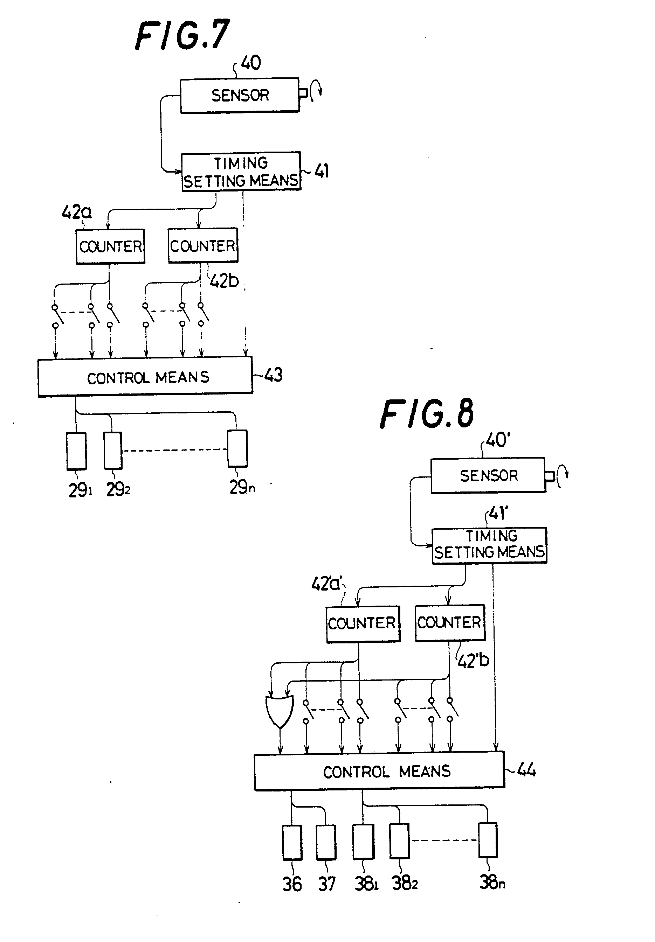

The open/close control of the respective solenoid valves 29, 36, 37 and 38 is for the air feed system 21 and the oil feed system 22 is effected by a control circuit 39 in Figure 5. Figures 7 and 8 are

3

block diagrams respectively showing outlines of the air feed system 21 and oil feed system 22 for the control circuit 39.

In the air feed system control circuit shown in Figure 7, there is a sensor 40 which functions in synchronization with the moulding cycle of the respective forming sections of the bottle making machine for outputting a signal corresponding to one cycle of each forming section. A timing setting means 41 for directly receiving the signal of the above sensor 40 is arranged to designate any desired section in one cycle for each forming section, thereby to produce an on/off signal with the appropriate timing. There are also provided counters 42a and 42b which have the respective set counts and receive and count the count signals corresponding to the respective forming sections and produced from said timing setting means 41, and clear the count upon reaching a predetermined count value and send out signals to a control means 43 at the subsequent stage.

More specifically, when the number of the cycles of the respective forming sections reaches the set counts of the counter 42a or 42b, the signal corresponding thereto is input to the control means 43. In the control means 43, the signal direct from the timing setting means 41 and the signal input through the counter 42a or 42b are logic processed to output a signal for the open/close control of the solenoid valve 29 in the corresponding forming section. The counters 42a and 42b are arranged to be designated as desired according to the respective forming sections, to determine at which cycle the open/close function of the solenoid valve 29 for the respective forming section is to be effected.

Meanwhile, in the oil feed system control circuit shown in Figure 8, the sensor 40', timing setting means 41', and counters 42'a and 42'b are also used for the air feed system control circuit described earlier. This circuit effects the open/close control of the solenoid valves 38 for the branch passages 32a of the manifold 32 corresponding to the respective forming sections with the output of a control means 44 which subjects to logic processing the timing signal of the timing setting means 41' and the output of the counter 42'a or 42'b; this circuit also effects the open/close control of the solenoid valves 36 and 37 which are used for pressurization and depressurization of the circulation passage for the oil feed system 22. For the control of the solenoid valves 36 and 37, the circuit is so constructed that they can function, even when either of the counters 42a or 42b counts up, so that the open/close function of these solenoid valves 36 and 37 is carried out without fail when any one of the other solenoid valves 38 corresponding to the forming sections is caused to function.

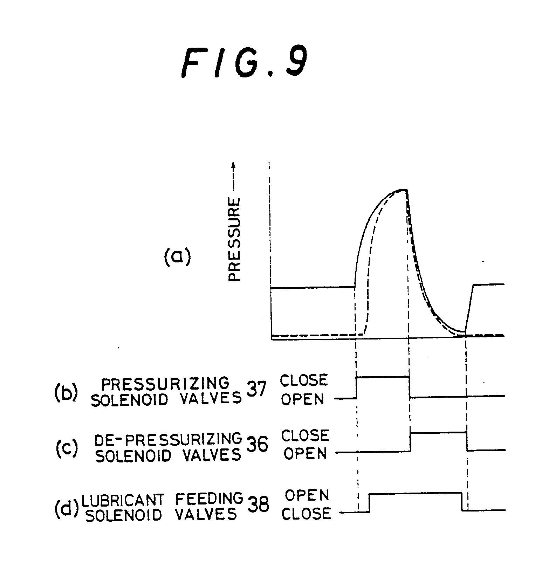

Figures 9 (a), (b), (c) and (d) are diagrams showing the relation between the open/close functions of the pressurizing and de-pressurizing solenoid valves 36 and 37 and other solenoid valves 38 corresponding to the forming sections, and the oil pressure within the manifold 32 and the oil pressure within the oil feed passage downstream of the solenoid valves 38 corresponding to the open/close functions.

The apparatus functions as follows.

The solenoid valves 29 and 38 corresponding to the respective forming sections in the air feed system 21 and the oil feed system 22 are normally closed. On the other hand, the pressurizing and de-pressurizing solenoid valves 36 and 37 for the oil feed system 22 are normally open. When the bottle making machine starts functioning, at each moulding cycle of the respective forming sections, the sensor 40 feeds corresponding signals to the timing setting means 41. Upon receipt of the signal, the timing setting means 41 feeds to the control means 43 and 44, timing signals equivalent to the predetermined specific section in the one cycle of the forming section. The setting of the section in the cycle by the timing setting means 41 is arranged to be altered as desired even during operation of the bottle making machine.

If for example, the counter 42a is designated in advance with respect to a certain forming section, when the number of cycles of this forming section has reached the set count of said counter 42a, a count-up signal is applied from the counter 42a to the control means 43. At the control means 43, this signal, and the timing signal corresponding to this forming section and separately fed from the timing setting means 41, are subjected to logic processing so as to open the air feed solenoid valve 29 corresponding to this forming section.

Meanwhile, from the timing setting means 41, the timing signal corresponding to the above forming section is also fed to the oil feeding control means 44 in the similar manner, while the pressurizing and de-pressurizing timing signals are fed separately from the above. Similarly, the counter 42a also feeds a count-up signal to the control means 44. In the control means 44, these signals are subjected to logic processing to effect the open/close control of the pressurizing solenoid valve 37, de-pressurizing solenoid valve 36 and oil supply solenoid valve 38 corresponding to this forming section.

The above open/close control will be explained with reference to Figure 9. In the first place, the pressurizing solenoid 37 is closed as shown in Figure 3 (b), whereby the return port side of the circulating passage of the oil feeding system 22 is closed, and the oil pressure within the manifold 32 is sharply raised as shown by a solid line in Figure 9 (a). After a slight delay, the oil feed solenoid valve $38_1$ of the branch passages 32a of the manifold 32 is opened, and the pressure in the oil feed passage downstream of the solenoid valve $38_1$ starts to rise rapidly, as shown in a dotted line in Figure 9 (a) (in this embodiment, the pressure rises to 15 $kg/cm^2$). After a predetermined period of time, the pressurizing solenoid valve 37 is returned to its original open state, while the pressurizing solenoid valve 36 is closed, rapidly reducing to zero the oil pressure in the manifold 32. Following this, the oil pressure in the oil feed passage downstream of the solenoid valve 38 rapidly falls to zero. Thereafter, when the oil feeding solenoid valve 38 is returned to its original closed state, the de-pressurizing solenoid valve 36 is also returned to its original open state after a slight delay, and subsequently, the original state in which the lubricant passes through the circulating passage is restored (in this embodiment, the oil pressure reaches 5 kg/cm$^2$ at this time).

By the control functions of the air feed system 21 and the oil feed system 22 as described above, the lubricant and pressurized air are fed into the respective through-holes 5a of the neck ring nozzle holders 5 of the above forming sections, are mixed, and are sprayed in the form of a mist from the neck ring nozzles 12 provided at the forward end of each holder 5. For the timing of this spraying, the timing setting means 41 of the control circuit 39 is adjusted so that at this moment the neck rings 13 are on neck mould receiving seat 8, as shown in Figure 3.

In this embodiment, since the two counters 42a and 42b, with different set counts, are provided as the counters for setting the spraying intervals of the lubricant, the spraying interval may be set as desired by selecting one for them for designation. Moreover, due to the fact that either of the counters 42a or 42b may be selected as desired for each forming section, it is possible to set a different spraying frequency for each section, particularly when the parting properties of the moulds differ owing to the difference in external factors applicable to the respective forming sections. If the external factors etc are different, for each cavity in one forming section, or where a pair of nozzles are provided for one mould as in this embodiment and the external factors are different for each of these nozzles, it is possible to apply the lubricant uniformly to the moulds with the respective nozzles by adjusting the respective constant volume devices 15.

In the foregoing embodiment, although the arrangement in which the counters 42a and 42b are used both for the air feed system 21 and the oil feed system 22, different counters may be employed for the air feed system 21 and the oil feed system 22 so as to feed the lubricant by a designated cycle independent of the feed of compressed air. In this case, the lubricant is sprayed in the cycle designated for the supply of the pressurized air.

The arrangement shown in the diagram of Figure 6 for the blank moulds, is exactly the same as for the neck rings, the mechanism comprising an air feed system 121 and an oil feed system 122.

The air feed system 121 includes a compressor 125 for supplying compressed air into a manifold 124 through an air passage 123, a filter 126 in the air feed passage 123, a pressure reducing valve 127 and a lubricator 128, etc. Respective branch passages 124a from the manifold 124 each correspond to the respective forming sections of the bottle making machine. Respective solenoid valves 129 are provided in these passages 124a, and each passage 124a communicates with the respective air feed passage 3b in the support bracket 3 for the corresponding forming section.

The oil feed system 122 includes a pump 133 for supplying a lubricant in the tank 130 to a manifold 132 through an oil feed passage 131, an oil return passage 134 leading to the tank 130 from the end of the manifold 132, a relief valve 135 provided in the oil feed passage 131 so as to open a branch passage 131a when the pressure in the passage 131 exceeds a set value, for returning excess lubricant to the tank 130, a solenoid valve 136 for opening and closing the oil feed passage 131, and a solenoid valve 137 for opening and closing the oil return passage 134, with a circulating passage being formed by the oil feed passage 131, manifold 132 and oil return passage 134, whereby the lubricant is circulated at all times to avoid trouble such as settling of the lubricant, clogging, etc. Respective branch passages 132a from the manifold 132 are also provided to correspond to the respective forming sections of the bottle making machine, with respective solenoid valves 138 in each branch passage 132a; an oil feed passage 63 connected to the respective solenoid valve 138 is connected to the junction box 10 of the corresponding forming section.

The open/close control of the respective solenoid valves 129, 136, 137 and 138 for the air feed system 121 and the oil feed system 122 is effected by a control circuit 139.

The control circuit 139 has exactly the same construction as the control circuit 39 of Figure 5 for the neck rings, but the adjustment at the timing settling means 41 of the control circuit 139 is so made that the lubricant mist is sprayed at the moment when the two mould halves of the blank mould 18 have stopped in their fully opened position.

Since the functioning of the respective solenoid valves and control circuits are exactly the same as in the case of the neck rings, no detailed description is given.

As the spray of the lubricant is directed upwardly from the nozzles 12 disposed below the neck rings 13, towards approximately the intermediate area of the mould surfaces of the neck rings 13, there is no possibility of the spray of the lubricant being disturbed by the rising air current produced in a high temperature atmosphere around the plunger mechanism 1, and thus the lubricant can be almost uniformly applied over the entire mould surfaces; a very small amount of lubricant (0.01 c.c.—0.30 c.c. per nozzle) may be sufficient for the purpose, since there is no wasteful scattering of the lubricant. This also contributes to an improvement of the yield rate of the products, since the products formed immediately after the application of the lubricant cannot become faulty due to soiling by the lubricant. Particularly, even in the case of the double gob or triple gob system as in the present embodiment, the distance between the neck rings 13 and the nozzles 12 at the respective cavities may be made equal to each other, with a simultaneous reduction (about 50 mm) of such distance, and therefore it is more advantageous to reduce the lubricant solution to a still smaller amount. Moreover, since the spray is directed from the lower side, one can avoid soiling the plunger with the lubricant solution and this inviting defects in the final products.

Furthermore, as the neck ring nozzle holders 5 are mounted on the upper portion of the plunger mechanism 1 by the support bracket 3, even when neck rings of different kinds are employed, they follow the vertical movements of the plunger mechanism 1 as in the same unit, without any alteration of the mutual positional relation, and accordingly the positional relation between the neck ring nozzles 12 and the neck rings 13 corresponding thereto may be maintained constant at all times, and thus, also for this reason, the uniform application of the lubricant and the application of a very small amount of lubricant can be facilitated.

In spraying the lubricant into the blank moulds, the situation is generally the same as in the case of the neck rings 13, and uniform application may be achieved while using a very small amount of the lubricant.

Since the neck ring nozzle holders 5 are pivotally connected to the air feeding block 7, and can be raised and lowered, they can be retracted from the position of the neck ring receiving seat 8 by swinging these holders 5 up into the positions shown by the imaginary lines in Figure 3 during replacement of the plunger and thimble, thus not obstructing the replacement.

The blank mould nozzle holders 6 do not obstruct the replacement of the blank moulds, since they are disposed adjacent the lower portion of the blank moulds, and in the similar manner to the neck rings, the mutual positional relation does not vary, even when the neck rings are changed for neck rings of a different kind.

Although the lubricant improves mould parting, it can also reduce the life of the moulds; therefore, the interval for spraying should preferably be as long as possible. Coatings, for example, of carbon, nickel plating, carbon fluoride plating, etc., can be applied to the mould surfaces of the neck rings, blank moulds, bottom plates and the like, in order to prolong the spraying interval.

In the present embodiment, when no carbon coating was applied to the mould surfaces of the blank moulds, in order to avoid formation of defects on the finished articles, the spraying interval at the early stage had to be lowered to less than 40 in the count value of the counter, whilst when a carbon coating was applied to the mould surfaces, it was possible to make the interval at 60 in the count value of the counter. As is seen from the above result, the life of the blank moulds is about 30% longer if the carbon coating is applied, as compared to no such coating being applied.

It should be noted here that in the foregoing embodiment, although independent piping systems and control systems are employed for the apparatuses for the neck rings, blank moulds and bottom plates, the arrangement may be so modified that a common piping system and a common control system are adopted, depending on necessity.

The present invention has been described above purely by way of example, and modifications can be made within the scope of the claims.

## Claims

1. A mould lubricating apparatus for a glassware forming machine having a plunger mechanism (1) and mould parts (13, 18) which form the glassware, which apparatus comprises nozzle holders (5, 6) and nozzles (12, 17) supported by the holders (5, 6) for spraying a mixed mist of lubricant and air onto moulding surfaces of the mould parts (13, 16), feed means (21, 121) for feeding lubricant to the nozzles (12, 17), feed means (22, 122) for feeding compressed air to the nozzles (12, 17), and control means (39, 139) for controlling the feed means (21, 22, 121, 122), characterised in that the nozzle holders (5, 6) are disposed at the upper portion of the plunger mechanism (1), the nozzles (12, 17) are located beneath the respective mould parts (13, 18), and the mist of lubricant and air is sprayed upwards onto the moulding surfaces.

2. The apparatus of Claim 1, wherein at least some of the nozzles (12) are for lubricating the moulding surfaces of neck rings (13), the respective holders (5) being beneath the moulding positions of the neck rings (13).

3. The apparatus of Claim 2, wherein the neck ring nozzle holders (5) are pivotally connected to a feed block (7) which feeds lubricant and air to the nozzle holders (5), so that the nozzle holders (5) can be swung back to a position in which they do not obstruct the replacement of the plunger (1).

4. The apparatus of any of the preceding Claims, wherein at least some of the nozzles (17) are for lubricating the moulding surface of the mould halves (18), the respective holders (6) being beneath the open positions of the mould halves (18).

5. The apparatus of any of the preceding Claims, wherein a plurality of nozzles (12, 17) is provided for each mould part (13, 18).

6. The apparatus of any of the preceding Claims, wherein the nozzles (12, 17) are for lubricating the moulding surfaces of neck rings (13) and mould halves (18), there being an air feed means (22) and a control means (39) for the neck ring nozzles (12) and a separate air feed means (122) and control means (139) for the mould half nozzles (17).

7. A glassware forming machine having a plunger mechanism (1) with an upwardly moving plunger, for forming glassware using neck rings (13) and mould halves (18), the machine having the mould lubricating apparatus of any of the preceding Claims for lubricating moulding surfaces of mould parts.

**Patentansprüche**

1. Form-Schmiergerät für eine Maschine zum Formen von Glasgegenständen, mit einem Tauchkolbenmechanismus (1) und Formteilen (13, 18), welche die Glasgegenstände formen, wobei das Gerät Düsenhalter (5, 6) und Düsen (12, 17) enthält, die von den Haltern (5, 6) gehalten werden, um einen Gemischnebel aus Schmierstoff und Luft auf die Formoberflächen der Formteile (13, 16) zu sprühen, Fördermittel (21, 121) enthält, um den Düsen (12, 17) Schmierstoff zuzuführen, Fördermittel (22, 122) enthält, um Druckluft zu den Düsen (12, 17) zu befördern, sowie Steuermittel (39, 139) enthält, um die Fördermittel (21, 22, 121, 122) zu steuern, dadurch gekennzeichnet, daß die Düsenhalter (5, 6) im oberen Teil des Tauchkolbenmechanismus (1) angeordnet sind, die Düsen (12, 17) unter den entsprechenden Formteilen (13, 18) angeordnet sind und der Nebel aus Schmierstoff und Luft nach oben auf die Formoberflächen gesprüht wird.

2. Gerät nach Anspruch 1, worin wenigstens einige der Düsen (12) vorgesehen sind, um die Formoberflächen von Halsringen (13) zu schmieren, wobei die entsprechenden Halter (5) sich unterhalb der Formpositionen der Halsringe (13) befinden.

3. Gerät nach Anspruch 2, worin die Halsring-Düsenhalter (5) schwenkbar an einen Förderblock (7) angeschlossen sind, der Schmierstoff und Luft zu den Düsenhaltern (5) befördert, so daß die Düsenhalter (5) in eine Stellung zurückgeschwenkt werden können, in welcher sie das Ersetzen des Tauchkolbens (1) nicht behindern.

4. Gerät nach einem der vorstehenden Ansprüche, worin wenigstens einige der Düsen (17) vorgesehen sind, um die Formoberflächen der Formhälften (18) zu schmieren, wobei die entsprechenden Halter (6) sich unterhalb der Öffnungsstellungen der Formhälften (18) befinden.

5. Gerät nach einem der vorstehenden Ansprüche, worin mehrere Düsen (12, 17) für jedes Formteil (13, 18) vorgesehen sind.

6. Gerät nach einem der vorstehenden Ansprüche, worin die Düsen (12, 17) vorgesehen sind, um die Formoberflächen von Halsringen (13) und Formhälften (18) zu schmieren, wobei eine Luft-Fördereinrichtung (22) und eine Steuereinrichtung (39) für die Halsring-Düsen (12) und eine getrennte Luft-Fördereinrichtung (122) und Steuereinrichtung (139) für die Formhälften-Düsen (17) vorgesehen sind.

7. Maschine zum Formen von Glasgegenständen, mit einem Tauchkolbenmechanismus (1), der einen aufwärts beweglichen Tauchkolben aufweist, zum Formen von Glasgegenständen unter Verwendung von Halsringen (13) und Formhälften (18), wobei die Maschine das Form-Schmiergerät nach einem der vorstehenden Ansprüche zum Schmieren der Formoberflächen der Formteile aufweist.

**Revendications**

1. Dispositif de lubrification de moules pour une machine de fabrication d'objets en verre ayant un mécanisme de plongeur (1) et des parties de moules (13, 18) pour former l'objet en verre, lequel dispositif comporte des porte-buses (5, 6) et des buses (12, 17) supportées par les porte-buses (5, 6) pour pulvériser un brouillard mixte de lubrifiant et d'air sur les surfaces de moulage des parties de moules (13, 18), des moyens d'alimentation (22, 122) pour amener un lubrifiant aux buses (12, 17), des moyens d'alimentation (21, 121) pour amener de l'air comprimé aux buses (12, 17), et des moyens de commande (39, 139) pour commander les moyens d'alimentation (21, 22, 121, 122), caractérisé en ce que les porte-buses (5, 6) sont disposés au niveau de la portion supérieure du mécanisme de plongeur (1), que les buses (12, 17) sont disposées en-dessous des parties de moules respectives (13, 18) et que le brouillard d'air et de lubrifiant est pulvérisé vers le haut sur les surfaces de moulage.

2. Dispositif selon la revendication 1, dans lequel au moins quelques-unes des buses (12) servent à lubrifier les surfaces de moulage des bagues de goulot (13), les porte-buses respectifs (5) se trouvant en-dessous des positions de moulage des bagues de goulot (13).

3. Dispositif selon la revendication 2, dans lequel les porte-buses de bagues de goulot (5) sont articulés sur un bloc d'alimentation (7) qui amène le lubrifiant et l'air aux porte-buses (5) de telle sorte que les porte-buses (5) peuvent être basculés vers l'arrière, dans une position dans laquelle ils ne gênent pas le remplacement du plongeur (1).

4. Dispositif selon l'une quelconque des revendications précédentes, dans lequel au moins certaines des buses (17) servent à lubrifier la surface de moulage des moitiés de moule (18), les porte-buses respectifs (6) se trouvant en-dessous des positions ouvertes des moitiés de moule (18).

5. Dispositif selon l'une quelconque des revendications précédentes, dans lequel on prévoit une multiplicité de buses (12, 17) pour chaque partie de moule (13, 18).

6. Dispositif selon l'une quelconque des revendications précédentes, dans lequel les buses (12, 17) servent à lubrifier les surfaces de moulage des bagues de goulot (13) et des moitiés de moule (18), et dans lequel il est prévu des moyens d'alimentation en air (21) et un dispositif de commande (39) pour les buses de bagues de goulot (12) et des moyens d'alimentation en air (121) et un dispositif de commande (39) séparés pour les buses des moitiés de moule (17).

7. Machine de fabrication d'objets en verre ayant un mécanisme de plongeur (1) avec un plongeur se déplaçant vers le haut pour former des objets en verre en utilisant des bagues de goulot (13) et des moitiés de moule (18), cette machine ayant le dispositif de lubrification des moules selon l'une quelconque des revendications précédentes pour lubrifier des surfaces de moulage des parties de moules.

## FIG.1

## FIG.2

0 147 229

# FIG.3

# FIG.4

# F I G . 5

# FIG.6

# FIG.7

SENSOR ~40

TIMING SETTING MEANS ~41

42a COUNTER  COUNTER  42b

CONTROL MEANS ~43

$29_1$  $29_2$  $29_n$

# FIG.8

SENSOR ~40'

TIMING SETTING MEANS ~41'

42'a COUNTER  COUNTER  42'b

CONTROL MEANS ~44

36  37  $38_1$  $38_2$  $38_n$

# FIG. 9

(a) PRESSURE —→

(b) PRESSURIZING SOLENOID VALVES 37    CLOSE OPEN

(c) DE-PRESSURIZING SOLENOID VALVES 36    CLOSE OPEN

(d) LUBRICANT FEEDING SOLENOID VALVES 38    OPEN CLOSE